# EUROPÄISCHE PATENTANMELDUNG

(11) **EP 4 831 597 A1**
(43) Veröffentlichungstag der Anmeldung: **28.10.2026**
(21) Anmeldenummer: 26173675.5
(22) Anmeldetag: 21.04.2026
(51) Int. Cl.: G01F 25/10, G01F 1/58

(54) **VERFAHREN ZUR KONFIGURATION EINES DURCHFLUSSMESSGERÄTS MIT EINEM VON EINEM MEDIUM DURCHSTRÖMTEN MESSROHR**

(30) Priorität: 22.04.2025 DE 102025115410
(71) Anmelder: Krohne Messtechnik GmbH, 47058 Duisburg (DE)
(72) Erfinder: Gedikli, Ali-Osman, 47119 Duisburg (DE); den Haan, Arthur, 2311 VH Leiden (NL); Kuschnerus, Dirk, 47802 Krefeld (DE); Lüke, Christopher, 45892 Gelsenkirchen (DE); Walbrecker, Sven, 27639 Wurster Nordseeküste (DE)
(74) Vertreter: Gesthuysen Patentanwälte

(57) **Zusammenfassung**

Beschrieben und dargestellt ist ein Verfahren (1) zur Konfiguration eines Durchflussmessgeräts (2) mit einem von einem Medium (3) durchströmten Messrohr (4), mit wenigstens einem Messaufnehmer (5) zur Erfassung einer von der Strömung des Mediums (3) in dem Messrohr (4) abhängigen Aufnehmermessgröße (m) und mit einlaufseitigen und auslaufseitigen Anschlüssen (6) zur Montage des Durchflussmessgeräts (2) in eine konkrete Einbausituation, mit einer Steuer- und Auswerteeinheit (7), die unter Verwendung einer Kalibrierkurve (K_cal) anhand der von dem Messaufnehmer (5) erfassten Aufnehmermessgröße (m) auf den Durchfluss (Vp) des Mediums (3) durch das Messrohr (4) schließt und den ermittelten Durchfluss (Vp) als Durchflussmesswert bereitstellt, wobei die Kalibrierkurve (K_cal) einen Zusammenhang herstellt zwischen der Aufnehmermessgröße (m) und dem Durchfluss (Vp) des Mediums (3) durch das Messrohr (4) bei definierten Kalibrier-Betriebsbedingungen (x_cal).

Eine erhöhte Zuverlässigkeit der Messung bei abweichenden Betriebsbedingungen wird dadurch erzielt, dass in einem Betriebsbedingung-Schritt (8) für das Durchflussmessgerät (2) Betriebsbedingungen (x_new) angegeben werden, die zumindest teilweise von den definierten Kalibrier-Betriebsbedingungen (x_cal) abweichen, dass in einem Kalibrierkurven-Schritt (9) ein numerisches strömungsmechanisches Modell (10) zumindest des Durchflussmessgeräts (2) mit den angegebenen Betriebsbedingungen (x_new) parametriert wird und mit einem anhand des parametrierten numerischen strömungsmechanischen Modells (10) berechneten Strömungsprofils (11) des Mediums (3) eine angepasste Kalibrierkurve (K_new) für die angegebenen Betriebsbedingungen (x_new) berechnet wird und dass die angepasste Kalibrierkurve (K_new) so in dem Durchflussmessgerät (2) hinterlegt (12) wird, dass die Steuer- und Auswerteeinheit (7) des Durchflussmessgeräts (2) zur Ermittlung des Durchflusses des Mediums (3) durch das Messrohr (3) die angepasste Kalibrierkurve (K_new) als die Kalibrierkurve (K_cal) verwendet.

## Beschreibung

Die Erfindung betrifft ein Verfahren zur Konfiguration eines Durchflussmessgeräts mit einem von einem Medium durchströmten Messrohr, mit wenigstens einem Messaufnehmer zur Erfassung einer von der Strömung des Mediums in dem Messrohr abhängigen Aufnehmermessgröße und mit einlaufseitigen und auslaufseitigen Anschlüssen zur Montage des Durchflussmessgeräts in eine konkrete Einbausituation, mit einer Steuer- und Auswerteeinheit, die unter Verwendung einer Kalibrierkurve anhand der von dem Messaufnehmer erfassten Aufnehmermessgröße auf den Durchfluss des Mediums durch das Messrohr schließt und den ermittelten Durchfluss als Durchflussmesswert bereitstellt, wobei die Kalibrierkurve einen Zusammenhang herstellt zwischen der Aufnehmermessgröße und dem Durchfluss des Mediums durch das Messrohr bei definierten Kalibrier-Betriebsbedingungen.

Das beschriebene Verfahren zur Konfiguration eines Durchflussmessgerätes wird seit Jahrzehnten praktiziert, insbesondere bei der werksseitigen Ersteinrichtung des Durchflussmessgeräts mittels eines Kalibrierstands, bei dem die genannten definierten Kalibrier-Betriebsbedingungen sichergestellt werden können. Je nach Art der Durchflussmessung, also des der Durchflussmessung zu Grunde liegenden physikalischen Messprinzips, kommen unterschiedliche Messaufnehmer zum Einsatz, die unterschiedliche Aufnehmermessgrößen bereitstellen. Bei magnetisch-induktiver Durchflussmessung sind die Aufnehmermessgrößen Elektrodenpotenziale bzw. eine elektrische Elektroden-Differenzspannung, aus der sich eine Strömungsgeschwindigkeit und damit ein Volumenfluss des Mediums durch das Messrohr ableiten lässt. Bei der Coriolis-Durchflussmessung werden zwei Messrohrschwingungen durch Schwingungsaufnehmer erfasst und aus deren Phasendifferenz wird ein Massedurchfluss des Mediums durch das Messrohr bestimmt. Bei der Vortex-Durchflussmessung wird von einem Druckaufnehmer als Aufnehmermessgröße ein Mediumdruck erfasst, dessen Änderungsfrequenz einer Wirbelfrequenz im Medium entspricht, aus der eine Mediumgeschwindigkeit und damit ein Volumendurchfluss des Mediums durch das Messrohr ableitbar ist. Ähnliches ließe sich anführen für die Ultraschall-, Schwebekörper- und Temperaturdurchflussmessung usw.

Bei allen angeführten Beispielen gibt die Kalibrierkurve den aufgezeigten Zusammenhang wieder zwischen der jeweiligen Aufnehmermessgröße und dem Durchfluss des Mediums durch das Messrohr bei den definierten Kalibrier-Betriebsbedingungen. Die Kalibrierkurve kann geräteindividuell aufgenommen worden sein oder beispielsweise auch für einen Gerätetyp gelten. Üblicherweise werden mehrere Wertepaare von Aufnehmermessgröße und Medium-Durchfluss aufgenommen und eine entsprechende Kalibrierkurve durch Interpolation zwischen den erfassten Werten interpoliert. Die Kalibrierkurve selbst kann letztlich beispielsweise in Form einer Wertetabelle oder einer mathematischen Beschreibung des Kurvenverlaufs vorliegen.

Wenn das Durchflussmessgerät außerhalb der definierten Kalibrier-Betriebsbedingungen betrieben wird, können die aufgrund der bei den definierten Kalibrier-Betriebsbedingungen ermittelten Kalibrierkurve berechneten und ausgegebenen Durchflussmesswerte fehlerhaft sein, also auch fehlerhafter als es aufgrund eines bei Kalibrier-Betriebsbedingungen ermittelten und für das Durchflussmessgerät angegebenen Messfehlers zu erwarten wäre.

Aufgabe der vorliegenden Erfindung ist es daher, das beschriebene Verfahren zur Konfiguration eines Durchflussmessgeräts so weiterzuentwickeln, dass das Durchflussmessgerät auch bei von den Kalibrier-Betriebsbedingungen abweichenden Betriebsbedingungen zuverlässiger arbeitet.

Die hergeleitete Aufgabe wird bei dem beschriebenen Verfahren zur Konfiguration eines Durchflussmessgeräts zunächst und im Wesentlichen dadurch gelöst, dass in einem Betriebsbedingung-Schritt für das Durchflussmessgerät Betriebsbedingungen angegeben werden, die zumindest teilweise von den definierten Kalibrier-Betriebsbedingungen abweichen. Damit wird zunächst festgestellt, dass und inwieweit von den Kalibrier-Betriebsbedingungen abweichende Betriebsbedingungen vorliegen.

Weiterhin ist vorgesehen, dass in einem Kalibrierkurven-Schritt ein numerisches strömungsmechanisches Modell zumindest des Durchflussmessgeräts mit den angegebenen - und damit von den Kalibrier-Betriebsbedingungen abweichenden - Betriebsbedingungen parametriert wird und mit einem anhand des parametrierten numerischen strömungsmechanischen Modells berechneten Strömungsprofils des Mediums eine angepasste Kalibrierkurve für die angegebenen Betriebsbedingungen berechnet wird. Die angepasste Kalibrierkurve basiert auf den angegebenen Betriebsbedingungen und wird auf numerischem Weg hergeleitet, also ohne dass erneute Messungen in einem Kalibrierstand erforderlich sind.

Letztlich wird die angepasste Kalibrierkurve so in dem Durchflussmessgerät hinterlegt, dass die Steuer- und Auswerteeinheit des Durchflussmessgeräts zur Ermittlung des Durchflusses des Mediums durch das Messrohr die angepasste Kalibrierkurve - an Stelle der bei den definierten Kalibrier-Betriebsbedingungen ursprünglich ermittelten Kalibrierkurve - verwendet. Mit anderen Worten wird die angepasste Kalibrierkurve zur neuen Kalibrierkurve, die von der Steuer- und Auswerteeinheit verwendet wird.

Das Verfahren zur Konfiguration des Durchflussmessgeräts kann mehrfach und immer wieder für ein Durchflussmessgerät ausgeführt werden, insbesondere dann, wenn sich herausstellt, dass die aktuellen, angegebenen Betriebsbedingungen nicht mehr mit den Betriebsbedingungen übereinstimmen, bei denen die gerade verwendete Kalibrierkurve ermittelt worden ist.

Durch die beschriebene Konfiguration des Durchflussmessgeräts ist das Durchflussmessgerät so hergerichtet, dass es unter den angegebenen - und damit von den definierten Kalibrier-Betriebsbedingungen abweichenden - Betriebsbedingungen mit größerer Zuverlässigkeit, im Sinne einer erhöhten Genauigkeit, betrieben werden kann. Das Verfahren zur Konfiguration des Durchflussmessgeräts kann auch während des regulären Betriebes des Durchflussmessgeräts durchgeführt werden, es kann also Bestandteil des Betriebes des Durchflussmessgeräts sein.

Bei einer bevorzugten Ausgestaltung des Verfahrens sind die Kalibrier-Betriebsbedingungen und/oder die angegebenen Betriebsbedingungen Eigenschaften des Mediums, da sie oft unmittelbaren Einfluss auf den Durchfluss des Mediums durch das Durchflussmessgerät haben, also zu einem veränderten Zusammenhang zwischen der Aufnehmermessgröße und dem Durchfluss des Mediums durch das Messrohr führen. Insbesondere handelt es sich bei den Eigenschaften des Mediums um wenigstens eine der folgenden Eigenschaften: die Temperatur, die Viskosität, die Dichte des Mediums, den Druck im Medium, Informationen hinsichtlich der Phasen des Mediums (Mehrphaseninformationen), eine Partikelkonzentration im Medium, die Partikelgröße von Partikeln im Medium, der Gasvolumenanteil im Medium und/oder den Durchfluss des Mediums durch das Messrohr. Der Durchfluss des Mediums durch das Messrohr ist beispielsweise deshalb interessant, weil die dadurch bestimmbare Strömungsgeschwindigkeit, die (neben der dynamischen Viskosität und der Dichte des Mediums) in die Reynoldszahl eingeht, mitentscheidend ist für die Art der sich einstellenden Strömung (laminar, turbulent).

Damit diese Größen bei der Berechnung der angepassten Kalibrierkurve berücksichtigt werden können, muss das numerische strömungsmechanische Modell diese Eigenschaften bei der Berechnung des Strömungsprofils auch berücksichtigen. Die Möglichkeit der Berücksichtigung dieser Eigenschaften ergibt sich aus dem Umstand, dass das numerische strömungsmechanische Modell mit den zuvor angegebenen Betriebsbedingungen - und damit mit den angeführten Eigenschaften des Mediums -, einschließlich der Reynoldszahl, oder einer Auswahl dieser Parameter parametriert wird.

Gemäß einer weiteren vorteilhaften Ausgestaltung des Verfahrens sind die Betriebsbedingungen Eigenschaften der Einbausituation in Strömungsrichtung vor dem einlaufseitigen Anschluss und/oder hinter dem auslaufseitigen Anschluss des Durchflussmessgeräts. Zu diesen Eigenschaften der Einbausituation des Durchflussmessgeräts zählt insbesondere wenigstens einer der folgenden der Einbausituation geschuldeten Eigenschaften: Krümmungen, Abzweigungen, Durchmesseränderungen, Ventile, Einbauten, weitere Durchflussmessgeräte, (halbe) Absperrarmaturen oder Swirl-Generatoren (die meist Test- und Verifikationszwecken dienen). Damit die Eigenschaften der Einbausituation des Durchflussmessgeräts vor und hinter dem Durchflussmessgerät selbst berücksichtigt werden können, weist das numerische strömungsmechanische Modell entsprechende Erweiterungen auf, die die Angaben dieser Eigenschaften strömungstechnisch bei der Berechnung des Strömungsprofils des Mediums berücksichtigen. Die Berücksichtigung der Einbausituation trägt dem Umstand Rechnung, dass zur Erzielung eines möglichst ungestörten Strömungsprofils, das idealerweise unter Kalibrierbedingungen vorliegt, eine möglichst lange, gerade Einlaufstrecke und eine nicht zu kurze, gerade Auslaufstrecke vorliegen müssen, und keine vorgeschalteten Strömungsarmaturen vorhanden sind, die das Strömungsprofil ebenfalls verzerren können. Liegen diese Randbedingungen nicht vor, wird ihr Einfluss gemäß der beschriebenen Verfahrensvariante berücksichtigt.

Eine vorteilhafte Weiterentwicklung des Verfahrens ist dadurch gekennzeichnet, dass das numerische strömungsmechanische Modell des Durchflussmessgeräts anhand von originären definierten Kalibrier-Betriebsbedingungen überprüft wird. Mit originären definierten Kalibrier-Betriebsbedingungen sind hier tatsächlich die Kalibrier-Betriebsbedingungen gemeint, unter denen das Durchflussmessgerät werksseitig erstkalibriert worden ist (zum Beispiel mit Wasser, bei Raumtemperatur, bei einer minimalen bis zu einer maximalen Fließgeschwindigkeit, mit ungestörten Ein- und Auslaufstrecken). Hierbei handelt es sich demzufolge um zuverlässige und genaue Angaben zu Betriebsbedingungen. Bei der Überprüfung wird das numerische strömungsmechanische Modell mit den originären definierten Kalibrier-Betriebsbedingungen parametriert. Dann wird ein Kalibrierkurven-Unterschied ermittelt zwischen einer bei originären Kalibrier-Betriebsbedingungen messtechnisch erfassten originären Kalibrierkurve (also die werksseitig ermittelte Kalibrierkurve) und einer von dem mit den originären definierten Kalibrier-Betriebsbedingungen parametrierten numerischen strömungstechnischen Modell berechneten Kalibrierkurve. Vorzugsweise werden das numerische strömungstechnische Modell (strömungsphysikalische Gleichungen) und/oder die Simulationsrandbedingungen (zum Beispiel geometrische Parkettierung des Strömungsvolumens für die numerische Berechnung) so lange angepasst und präzisiert, bis der Kalibrierkurven-Unterschied kleiner ist als eine vorgegebene Kalibrierkurven-Unterschiedsgrenze. So kann sichergestellt werden, dass das numerische strömungstechnische Modell gewünschten Genauigkeitsanforderungen entspricht.

Bei dieser Weiterentwicklung des Verfahrens handelt es sich um einen vorgelagerten Schritt zur Verbesserung des numerischen strömungsmechanischen Modells, bevor das Modell mit abweichenden Betriebsbedingungen parametriert und zur Berechnung von angepassten Kalibrierkurven herangezogen wird.

Gemäß einer weiteren vorteilhaften Ausgestaltung des Verfahrens wird der Kalibrierkurven-Schritt auf einem von dem Durchflussmessgerät verschiedenen Service-Rechner durchgeführt und die auf dem Service-Rechner ermittelte angepasste Kalibrierkurve wird auf das Durchflussmessgerät übertragen, vorzugsweise über eine Datenverbindung zwischen dem Service-Rechner und dem Durchflussmessgerät oder mittels eines Bediengeräts, das über eine Bediengerätschnittstelle mit dem Durchflussmessgerät verbunden wird. Die Vorgehensweise hat sich insbesondere bei umfangreichen numerischen strömungsmechanischen Modellen als vorteilhaft erwiesen, deren Berechnung auf üblichen Durchflussmessgeräten nicht sinnvoll möglich ist, deren Hardwareausstattung meist so ausgelegt ist, dass die Durchführung der zentralen Messaufgabe möglich ist, darüber hinaus aber kaum Rechenkapazitäten bestehen. Da Durchflussmessgeräte meist über einen Feldbus auch mit übergeordneten Steuerungsrechnern verbunden sind, ist die beschriebene Vorgehensweise in den meisten Fällen möglich.

Bei einer weiteren bevorzugten Ausgestaltung des Verfahrens ist das Durchflussmessgerät ein magnetisch-induktives Durchflussmessgerät. Das magnetisch-induktive Durchflussmessgerät umfasst wenigstens eine Magnetfelderzeugungseinrichtung zum Erzeugen eines das Messrohr in einem Messbereich senkrecht zur Strömungsrichtung des Mediums durchsetzenden Magnetfeldes und wenigstens ein Messelektrodenpaar als Messaufnehmer im Messbereich des Messrohrs zum Abgreifen einer in dem Medium im Messrohr induzierten elektrischen Spannung als Aufnehmermessgröße. Die Steuer- und Auswerteeinheit ermittelt mittels der Kalibrierkurve, die der induzierten elektrischen Spannung einen Durchflussmesswert zuordnet, den Volumendurchfluss des Mediums durch das Messrohr. Gegebenenfalls wird auch die elektrische Flussdichte, die jeweils an den Messelektroden vorliegt, berücksichtigt.

Bevorzugt wird bei dem Einsatz des Verfahrens unter Verwendung eines magnetisch-induktiven Durchflussmessgeräts das von der Magnetfelderzeugungseinrichtung erzeugte Magnetfeld ortsaufgelöst ermittelt. Mit dem numerischen strömungsmechanischen Modell wird das Strömungsprofil des Mediums durch den Messbereich des Messrohrs berechnet. Mit einem mathematischen elektrodynamischen Modell wird aus dem Strömungsprofil des Mediums im Messbereich des Messrohrs und aus dem ermittelten Magnetfeld im Messbereich des Messrohrs sowie mit den Eigenschaften des Mediums im Messrohr unter den angegebenen Betriebsbedingungen die induzierte elektrische Spannung zwischen den Messelektroden des Messelektrodenpaares ermittelt.

Die Elektrodenspannung wird im Rahmen des elektrodynamischen Modells bevorzugt berechnet durch ein Volumenintegral über den Innenraum des magnetisch-induktiven Durchflussmessgeräts, Integrand ist das Skalarprodukt aus einer sogenannten Gewichtsfunktion und dem Geschwindigkeitsfeld der Strömung. In die Gewichtsfunktion geht insbesondere die ermittelte Verteilung des Magnetfeldes ein. Dadurch wird berücksichtigt, dass verschiedene Strömungselemente in unterschiedlicher Weise im Volumen des magnetisch-induktiven Durchflussmessgeräts zu der Messspannung beitragen.

Auf diesem Wege wird die angepasste Kalibrierkurve für die angegebenen Betriebsbedingungen ermittelt, die einen Zusammenhang herstellt zwischen der in dem Medium induzierten elektrischen Spannung zwischen den Messelektroden des Messelektrodenpaars als Aufnehmermessgröße und dem Durchfluss des Mediums durch das Messrohr für die angegebenen Betriebsbedingungen.

Im Zusammenhang mit der vorstehend beschriebenen Ausgestaltung des Verfahrens zeichnet sich eine bevorzugte Weiterbildung dadurch aus, dass das von der Magnetfelderzeugungsvorrichtung erzeugte Magnetfeld im Messbereich des Messrohrs anhand eines numerischen elektrodynamischen Modells ortsaufgelöst berechnet wird und/oder durch Messung einer Mehrzahl von Magnetfeldstärken im Messbereich des Messrohrs ortsaufgelöst messtechnisch bestimmt wird. Es hat sich als besonders vorteilhaft herausgestellt, wenn die mit dem numerischen elektrodynamischen Modell berechnete Magnetfeldverteilung mit der durch Messung bestimmten Magnetfeldverteilung verglichen wird und das numerische elektrodynamische Modell so angepasst und präzisiert wird, bis ein Magnetfeldverteilungs-Unterschied kleiner als eine vorgegebene Magnetfeld-Unterschiedsgrenze ist.

Das Verfahren zur Konfiguration eines Durchflussmessgeräts, das vorstehend zunächst allgemein beschrieben worden ist ohne einen speziellen Bezug zu einem bestimmten Durchflussmessverfahren, und das dann beschrieben worden ist im Hinblick auf magnetisch-induktive Durchflussmessgeräte, ist selbstverständlich auch auf Durchflussmessgeräte anwendbar, die auf Grundlage anderer Durchflussmessverfahren arbeiten, beispielsweise auf Grundlage der Durchflussmessverfahren, die eingangs genannt worden sind. Das im Kalibrierkurven-Schritt zum Einsatz kommende numerische strömungsmechanische Modell muss in der Lage sein, unter Berücksichtigung der von den definierten Kalibrier-Betriebsbedingungen abweichenden angegebenen Betriebsbedingungen den erforderlichen Zusammenhang herzustellen zwischen der bei dem jeweiligen Messverfahren auftretenden Aufnehmermessgröße und dem Durchfluss des Mediums durch das Messrohr. Dann lässt sich für jedes Durchflussmessverfahren und jedes diesbezügliche Durchflussmessgerät eine entsprechende angepasste Kalibrierkurve berechnen und in dem jeweiligen Durchflussmessgerät einsetzen.

Im Einzelnen gibt es nun eine Vielzahl von Möglichkeiten, das erfindungsgemäße Verfahren zur Konfiguration eines Durchflussmessgeräts auszugestalten und weiterzubilden. Dazu wird verwiesen einerseits auf die dem unabhängigen Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: schematisch ein aus dem Stand der Technik bekanntes Durchflussmessgerät mit einer Steuer- und Auswerteeinheit und einer Kalibrierkurve zur Bestimmung eines Durchflussmesswertes,
- Fig. 2: schematisch ein Verfahren zur Konfiguration eines Durchflussmessgerätes unter Einsatz eines numerischen strömungsmechanischen Modells,
- Fig. 3: schematisch ein Verfahren zur Konfiguration eines Durchflussmessgerätes unter Einsatz eines numerischen strömungsmechanischen Modells unter Berücksichtigung der Einbausituation des Durchflussmessgeräts,
- Fig. 4: schematisch ein Verfahren zur Konfiguration eines Durchflussmessgerätes unter Einsatz eines numerischen strömungsmechanischen Modells, wobei das numerische strömungsmechanische Modell verbessert wird unter Verwendung von originären Kalibrier-Betriebsbedingungen und
- Fig. 5: schematisch ein Verfahren zur Konfiguration eines Durchflussmessgerätes unter Einsatz eines numerischen strömungsmechanischen Modells und eines mathematischen elektrodynamischen Modells.

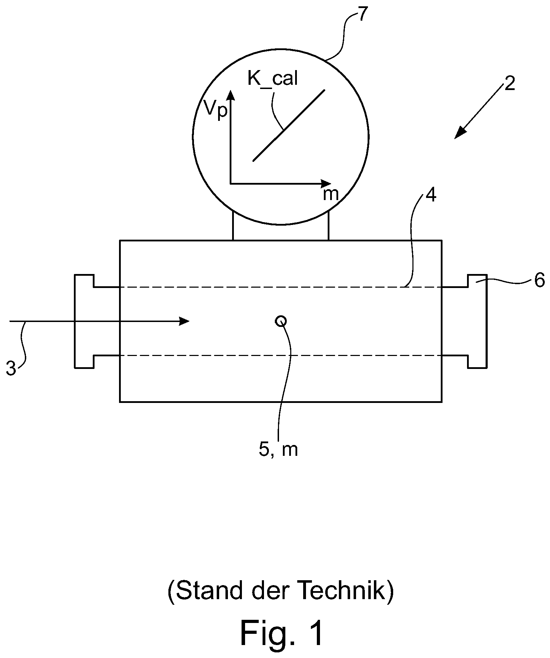

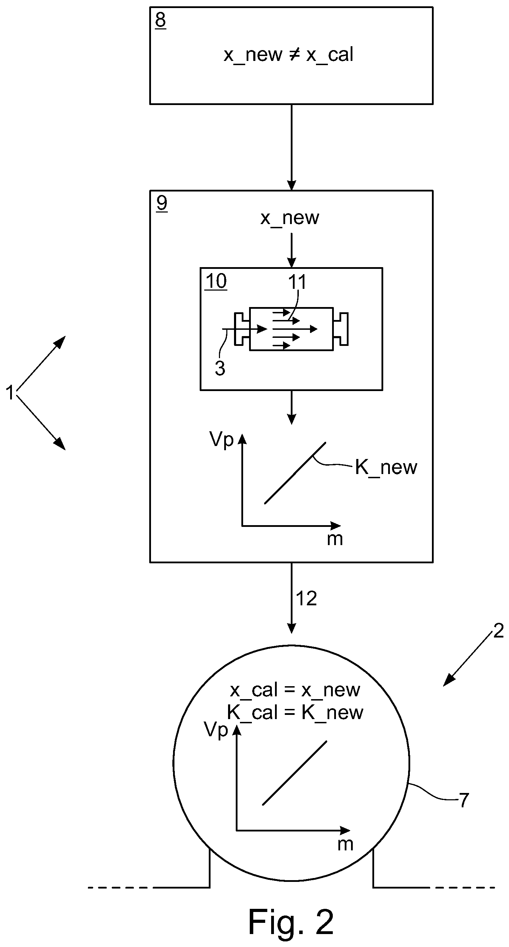

In den Fig. 2 bis 5 ist in unterschiedlichen Aspekten ein Verfahren 1 zur Konfiguration eines Durchflussmessgeräts 2 dargestellt. Fig. 1 zeigt ein Durchflussmessgerät 2 mit verschiedenen Merkmalen, die das Durchflussmessgerät 2 voraussetzungsgemäß aufweisen muss, damit das Verfahren 1 zur Konfiguration des Durchflussmessgeräts 2 auch sinnvoll durchgeführt werden kann.

Das Durchflussmessgerät 2 umfasst ein von einem Medium 3 durchströmtes Messrohr 4, wenigstens einen Messaufnehmer 5 zur Erfassung einer von der Strömung des Mediums 3 in dem Messrohr 4 abhängigen Aufnehmermessgröße m und einlaufseitige und auslaufseitige Anschlüsse 6 zur Montage des Durchflussmessgeräts 2 in eine konkrete Einbausituation, also beispielsweise in eine größere prozesstechnische Anlage, was in Fig. 1 nicht weiter gezeigt ist.

Das Durchflussmessgerät 2 umfasst ferner eine Steuer- und Auswerteeinheit 7, symbolisiert durch den angedeuteten Transmitterkopf, die unter Verwendung einer Kalibrierkurve K_cal anhand der von dem Messaufnehmer 5 erfassten Aufnehmermessgröße m auf den Durchfluss Vp des Mediums 3 durch das Messrohr 4 schließt und den ermittelten Durchfluss Vp als Durchflussmesswert bereitstellt. Die Kalibrierkurve K_cal stellt einen Zusammenhang her zwischen der Aufnehmermessgröße m und dem Durchfluss Vp des Mediums 3 durch das Messrohr 4 bei definierten Kalibrier-Betriebsbedingungen x_cal. In der Praxis wird die Kalibrierkurve K_cal oft nur durch eine einzige Gerätekonstante beschrieben, die Gerätekonstante repräsentiert dann den gesamten Messbereich und ist als die Steigung der Kalibrierkurve K_cal anzusehen.

Der Zusammenhang zwischen der Aufnehmermessgröße m und dem Durchfluss Vp des Mediums 3 gilt bei Vorliegen der definierten Kalibrier-Betriebsbedingungen x_cal, also beispielsweise bei einer bestimmten Temperatur und Viskosität des Mediums 3. Weichen die tatsächlichen Betriebsbedingungen von den definierten Kalibrier-Betriebsbedingungen x_cal ab, ist die Kalibrierkurve K_cal nicht oder nur sehr eingeschränkt (Messfehler) geeignet für die Ableitung des Durchflusses Vp aus der Aufnehmermessgröße m.

Hier setzt das in den Fig. 2 bis 5 dargestellte Verfahren 1 an, mit dem das Durchflussmessgerät 2 so konfiguriert wird, dass ein zuverlässigerer, also beispielsweise genauerer Betrieb des Durchflussmessgeräts 2 auch bei Betriebsbedingungen erzielt wird, die von den definierten Kalibrier-Betriebsbedingungen x_cal abweichen.

Wie in Fig. 2 zu sehen ist, sieht das Verfahren 1 vor, dass in einem Betriebsbedingung-Schritt 8 für das Durchflussmessgerät 2 Betriebsbedingungen x_new angegeben werden, die zumindest teilweise von den definierten Kalibrier-Betriebsbedingungen x_cal abweichen. Die Betriebsbedingungen x_new können ganz allgemein auf unterschiedlichen Wegen erfasst werden, sie können beispielsweise durch das Durchflussmessgerät 2 selbst erfasst werden. Einige Durchflussmessgeräte 2 sind beispielsweise in der Lage, die Temperatur, die Viskosität, die Dichte des Mediums 3 oder dessen Gasvolumenanteil (beispielsweise Coriolis-Massedurchflussmessgeräte) zu ermitteln. Die Betriebsbedingungen können aber auch an anderen Stellen erfasst werden und beispielsweise durch einen Leitrechner gesammelt und angegeben werden. Die Art und Weise der Erhebung und der Bereitstellung der Betriebsbedingungen x_new, die von den definierten Kalibrier-Betriebsbedingungen x_cal abweichen, ist für das Verfahren 1 nicht von Bedeutung, wichtig ist, dass die Betriebsbedingungen x_new - wie auch immer ermittelt - angegeben werden.

In einem Kalibrierkurven-Schritt 9 wird ein numerisches strömungsmechanisches Modell 10, häufig als CFD-Modell (Computational Fluid Dynamics) bezeichnet, zumindest des Durchflussmessgeräts 2 mit den angegebenen Betriebsbedingungen x_new parametriert. Anhand des parametrierten numerischen strömungsmechanischen Modells 10 wird ein Strömungsprofil 11 des Mediums 3 berechnet und aus dem berechneten Strömungsprofil 11 des Mediums wird eine angepasste Kalibrierkurve K_new für die angegebenen Betriebsbedingungen x_new berechnet. Um eine angepasste Kalibrierkurve K_new zu erhalten, wird das Strömungsprofil 11 für mehrere Durchflüsse Vp in dem interessierenden Durchflussmessbereich berechnet. Von dem Strömungsprofil 11 wird dann auf die Aufnehmermessgröße m geschlossen, die bei einem Durchflussmessgerät 2 von dem Durchfluss Vp des Mediums 3 und damit von dem Strömungsprofil 11 des Mediums 3 abhängt. Es kann sein, dass zu dem numerischen strömungsmechanischen Modell 10 noch numerische Modellerweiterungen eingesetzt werden müssen, um von dem Strömungsprofil 11 auf die Aufnehmermessgröße m im Rahmen einer Simulation schließen zu können.

Die angepasste Kalibrierkurve K_new wird dann so in dem Durchflussmessgerät 2 hinterlegt 12, dass die Steuer- und Auswerteeinheit 7 des Durchflussmessgeräts 2 zur Ermittlung des Durchflusses des Mediums 3 durch das Messrohr 4 die angepasste Kalibrierkurve K_new als die Kalibrierkurve K_cal verwendet. Die angepasste Kalibrierkurve K_new wird in der Steuer- und Auswerteeinheit 7 also zur aktuellen Kalibrierkurve K_cal und die angegebenen Betriebsbedingungen x_new zu den definierten Kalibrier-Betriebsbedingungen x_cal.

In den dargestellten Ausführungsbeispielen sind die Kalibrier-Betriebsbedingungen x_cal und die angegebenen Betriebsbedingungen x_new - jedenfalls auch - Eigenschaften des Mediums 3, vorliegend, die Temperatur, Viskosität und Dichte des Mediums 3 sowie der Durchfluss des Mediums 3.

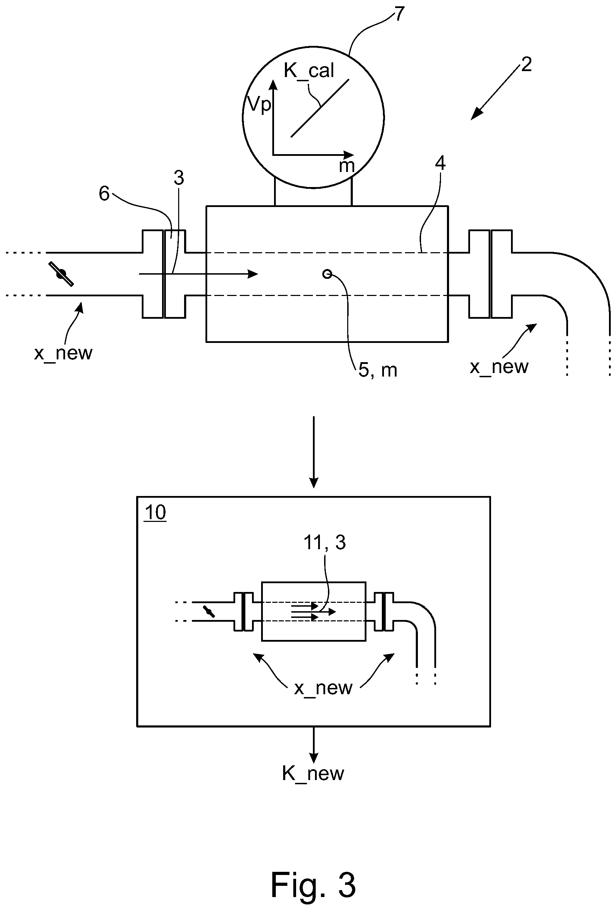

In Fig. 3 ist dargestellt, dass die definierten Kalibrier-Betriebsbedingungen x_cal und die angegebenen Betriebsbedingungen x_new auch Eigenschaften der Einbausituation in Strömungsrichtung vor dem einlaufseitigen Anschluss 6 und hinter dem auslaufseitigen Anschluss 6 des Durchflussmessgeräts 2 sind. Die definierten Kalibrier-Betriebsbedingungen x_cal umfassen bis zu einem gewissen Abstand vor dem einlaufseitigen Anschluss 6 eine gerade Einlaufstrecke und bis zu einem gewissen Abstand nach dem auslaufseitigen Anschluss 6 eine gerade Auslaufstrecke. Beide Bedingungen sind bei der in Fig. 3 dargestellten Einbausituation nicht erfüllt. Das numerische strömungsmechanische Modell 10 verfügt über entsprechende Modell-Erweiterungen, mit denen das Ventil einlaufseitig und die Krümmung auslaufseitig berücksichtigt werden, sodass diese Einflüsse auch bei der Bestimmung der angepassten Kalibrierkurve K_new auf Grundlage des numerischen strömungsmechanischen Modells 10 berücksichtigt sind. Das Verfahren 1 hat erhebliche Vorteile, da angepasste Kalibrierkurven K_new praktisch für alle angegebenen Betriebsbedingungen x_new ermittelt werden können, auch ohne das Durchflussmessgerät 2 aus seiner Einbausituation zu entfernen.

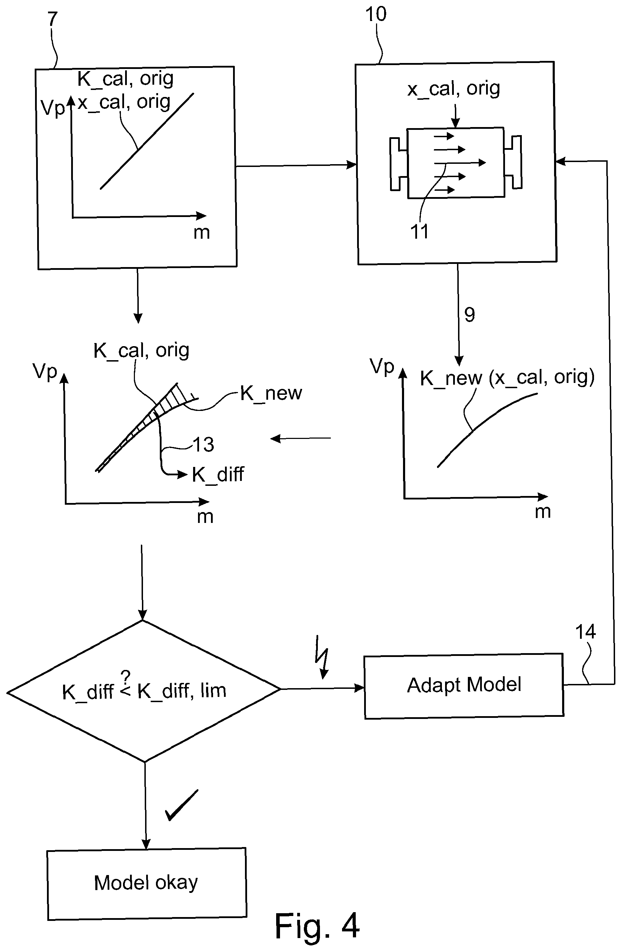

Fig. 4 zeigt eine Weiterentwicklung des Verfahrens 1, bei dem das numerische strömungsmechanische Modell 10 des Durchflussmessgeräts 2 anhand von originären definierten Kalibrier-Betriebsbedingungen x_cal,orig überprüft wird. Originäre definierte Kalibrier-Betriebsbedingungen x_cal,orig sind die Kalibrier-Betriebsbedingungen, bei denen das Durchflussmessgerät werksseitig kalibriert worden ist. Die Betriebsbedingungen haben also mit hoher Wahrscheinlichkeit und mit hoher Genauigkeit tatsächlich der messtechnisch erfassten originären Kalibrierkurve K_cal,orig zugrunde gelegen.

Das strömungsmechanische Modell 10 des Durchflussmessgeräts 2 wird anhand der originären definierten Kalibrier-Betriebsbedingungen x_cal,orig überprüft, indem das numerische strömungsmechanische Modell 10 mit den originären definierten Kalibrier-Betriebsbedingungen x_cal,orig parametriert wird und auf dieser Grundlage mit dem parametrierten numerischen strömungstechnischen Modell 10 die angepasste Kalibrierkurve K_new berechnet wird (in Fig. 4 die Teilfigur in der zweiten Zeile rechts).

Dann wird ein Kalibrierkurven-Unterschied K_diff ermittelt 13 (in Fig. 4 die Teilfigur in der zweiten Zeile links) zwischen der bei originären Kalibrier-Betriebsbedingungen x_cal,orig messtechnisch erfassten Kalibrierkurve K_cal,orig und der von dem mit den originären definierten Kalibrier-Betriebsbedingungen x_cal,orig parametrierten numerischen strömungstechnischen Modell 10 berechneten Kalibrierkurve K_new. In dem Ausführungsbeispiel wird als Kalibrierkurven-Unterschied K_diff die Fläche zwischen den beide Kalibrierkurven berechnet.

Das numerische strömungstechnische Modell 10 und die Simulationsrandbedingungen werden so lange angepasst 14 und präzisiert ("Adapt Model"), bis der Kalibrierkurven-Unterschied K_diff kleiner ist als eine vorgegebene Kalibrierkurven-Unterschiedsgrenze K_diff,lim. Ist der Kalibrierkurven-Unterschied K_diff kleiner als die vorgegebene Kalibrierkurven-Unterschiedsgrenze K_diff,lim ("Model okay"), wird das numerische strömungstechnische Modell 10 zur Durchführung des Verfahrens 1 verwendet. Es handelt sich also um einen vorbereitenden Verfahrensschritt, mit dem sichergestellt werden kann, dass das verwendete numerische strömungstechnische Modell 10 gewünschten Qualitätsansprüchen genügt.

Bei dem in den Figuren dargestellten Verfahren 1 wird der Kalibrierkurven-Schritt 9 auf einem von dem Durchflussmessgerät 2 verschiedenen Service-Rechner durchgeführt, und die auf dem Service-Rechner ermittelte angepasste Kalibrierkurve K_new wird von dem - nicht dargestellten - Service-Rechner auf das Durchflussmessgerät 2 übertragen.

Das geschilderte Verfahren 1 ist unabhängig von der Art des Durchflussmessgerätes 2 und dem dort verwirklichten Messprinzip umsetzbar.

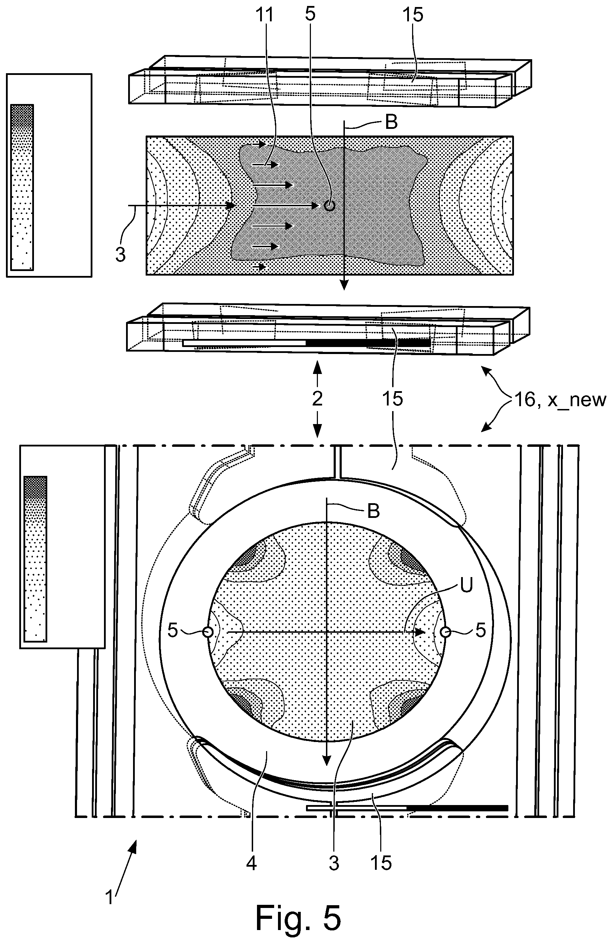

Bei den Durchflussmessgeräten gemäß den Fig. 3 und 5 ist das Durchflussmessgerät 2 ein magnetisch-induktives Durchflussmessgerät mit einer Magnetfelderzeugungseinrichtung 15 zum Erzeugen eines das Messrohr 4 in einem Messbereich senkrecht zur Strömungsrichtung des Mediums 3 durchsetzenden Magnetfeldes B, mit wenigstens einem Messelektrodenpaar als Messaufnehmer 5 im Messbereich des Messrohrs 4 zum Abgreifen einer in dem Medium 3 im Messrohr 4 induzierten elektrischen Spannung U als Aufnehmermessgröße m, wobei die Steuer- und Auswerteeinheit 7 mittels der Kalibrierkurve K_cal der induzierten elektrischen Spannung U einen Durchflussmesswert Vp zuordnet und so den Volumendurchfluss des Mediums 3 durch das Messrohr 4 ermittelt.

Bei einem magnetisch-induktiven Durchflussmessgerät muss das Medium 3 eine gewisse elektrische Leitfähigkeit aufweisen. Die die Leitfähigkeit verursachenden Ladungsträger, die sich mit dem Medium durch das Magnetfeld bewegen, erfahren in dem Magnetfeld eine Kraft, die in Abhängigkeit von der Strömungsgeschwindigkeit zu einer Ladungstrennung und damit zu einer elektrischen Potenzialdifferenz - der induzierten Spannung - in dem Medium führt, die als Aufnehmermessgröße m über das Messelektrodenpaar aufgenommen wird. Beim magnetisch-induktiven Durchflussmessgerät wirken also strömungstechnische und elektrodynamische Größen zusammen.

Wie in Fig. 5 gezeigt, wird das von der Magnetfelderzeugungseinrichtung 15 erzeugte Magnetfeld B ortsaufgelöst ermittelt. Für die angegebenen Betriebsbedingungen x_new wird mit dem numerischen strömungsmechanischen Modell 10 das Strömungsprofil 11 des Mediums 3 durch den Messbereich des Messrohrs 4 berechnet. Mit einem mathematischen elektrodynamischen Modell 16 wird aus dem Strömungsprofil 11 des Mediums 3 im Messbereich des Messrohrs 4 und aus dem ermittelten Magnetfeld B im Messbereich des Messrohrs 4 sowie mit den Eigenschaften des Mediums 3 im Messrohr 4 unter den angegebenen Betriebsbedingungen x_new die induzierte elektrische Spannung U zwischen den Messelektroden des Messelektrodenpaares ermittelt.

Derart wird die angepasste Kalibrierkurve K_new für die angegebenen Betriebsbedingungen x_new ermittelt, die einen Zusammenhang herstellt zwischen der in dem Medium 3 induzierten elektrischen Spannung U zwischen den Messelektroden des Messelektrodenpaars als Aufnehmermessgröße m und dem Durchfluss Vp des Mediums 3 durch das Messrohr 4 für die angegebenen Betriebsbedingungen x_new.

Bei der in Fig. 5 dargestellten Verfahrensvariante 1 wird das von der Magnetfelderzeugungsvorrichtung 15 erzeugte Magnetfeld B im Messbereich des Messrohrs 4 anhand eines numerischen elektrodynamischen Modells 16 ortsaufgelöst berechnet. Bei einer ebenfalls praktizierten Verfahrensvariante 1, die im Einzelnen nicht dargestellt ist, wird durch Messung einer Mehrzahl von Magnetfeldstärken das Magnetfeld B im Messbereich des Messrohrs 4 ortsaufgelöst messtechnisch bestimmt. Zur Sicherstellung der Qualität der mit dem numerischen elektrodynamischen Modell 16 berechneten Magnetfeldverteilung wird die mit dem Modell 16 berechnete Magnetfeldverteilung mit einer durch Messung bestimmten Magnetfeldverteilung verglichen. Das numerische elektrodynamische Modell 16 wird so angepasst und präzisiert, bis ein vorbestimmter Magnetfeldverteilungs-Unterschied kleiner ist als eine vorgegebene Magnetfeld-Unterschiedsgrenze. Diese Vorgehensweise ähnelt der Vorgehensweise zur Sicherstellung der Qualität des numerischen strömungsmechanischen Modells 10.

### Bezugszeichen

- 1: Verfahren
- 2: Durchflussmessgerät
- 3: Medium
- 4: Messrohr
- 5: Messaufnehmer
- 6: Anschlüssen
- 7: Steuer- und Auswerteeinheit
- 8: Betriebsbedingung-Schritt
- 9: Kalibrierkurven-Schritt
- 10: numerisches strömungsmechanisches Modell
- 11: Strömungsprofil
- 12: Hinterlegen der angepassten Kalibrierkurve
- 13: Ermittlung eines Kalibrierkurven-Unterschieds
- 14: Anpassung des numerischen strömungstechnischen Modells
- 15: Magnetfelderzeugungseinrichtung
- 16: mathematisches elektrodynamisches Modell

- m: Aufnehmermessgröße
- Vp: Durchfluss
- K_cal: Kalibrierkurve
- x_cal: Kalibrier-Betriebsbedingungen
- K_new: angepasste Kalibrierkurve
- x_new: angegebene Betriebsbedingungen
- K_cal,orig: originäre Kalibrierkurve
- x_cal,orig: originäre Kalibrier-Betriebsbedingungen
- K_diff: Kalibrierkurven-Unterschied
- K_diff,lim: Kalibrierkurven-Unterschiedsgrenze
- B: Magnetfeld
- U: induzierte elektrische Spannung

## Patentansprüche

1. Verfahren (1) zur Konfiguration eines Durchflussmessgeräts (2) mit einem von einem Medium (3) durchströmten Messrohr (4), mit wenigstens einem Messaufnehmer (5) zur Erfassung einer von der Strömung des Mediums (3) in dem Messrohr (4) abhängigen Aufnehmermessgröße (m) und mit einlaufseitigen und auslaufseitigen Anschlüssen (6) zur Montage des Durchflussmessgeräts (2) in eine konkrete Einbausituation, mit einer Steuer- und Auswerteeinheit (7), die unter Verwendung einer Kalibrierkurve (K_cal) anhand der von dem Messaufnehmer (5) erfassten Aufnehmermessgröße (m) auf den Durchfluss (Vp) des Mediums (3) durch das Messrohr (4) schließt und den ermittelten Durchfluss (Vp) als Durchflussmesswert bereitstellt, wobei die Kalibrierkurve (K_cal) einen Zusammenhang herstellt zwischen der Aufnehmermessgröße (m) und dem Durchfluss (Vp) des Mediums (3) durch das Messrohr (4) bei definierten Kalibrier-Betriebsbedingungen (x_cal),
**dadurch gekennzeichnet,**
**dass** in einem Betriebsbedingung-Schritt (8) für das Durchflussmessgerät (2) Betriebsbedingungen (x_new) angegeben werden, die zumindest teilweise von den definierten Kalibrier-Betriebsbedingungen (x_cal) abweichen,
**dass** in einem Kalibrierkurven-Schritt (9) ein numerisches strömungsmechanisches Modell (10) zumindest des Durchflussmessgeräts (2) mit den angegebenen Betriebsbedingungen (x_new) parametriert wird und mit einem anhand des parametrierten numerischen strömungsmechanischen Modells (10) berechneten Strömungsprofils (11) des Mediums (3) eine angepasste Kalibrierkurve (K_new) für die angegebenen Betriebsbedingungen (x_new) berechnet wird und
**dass** die angepasste Kalibrierkurve (K_new) so in dem Durchflussmessgerät (2) hinterlegt (12) wird, dass die Steuer- und Auswerteeinheit (7) des Durchflussmessgeräts (2) zur Ermittlung des Durchflusses des Mediums (3) durch das Messrohr (3) die angepasste Kalibrierkurve (K_new) als die Kalibrierkurve (K_cal) verwendet.

2. Verfahren (1) nach Anspruch 1, **dadurch gekennzeichnet, dass** die Kalibrier-Betriebsbedingungen (x_cal) und/oder die angegebenen Betriebsbedingungen (x_new) Eigenschaften des Mediums (3) sind, insbesondere Temperatur, Viskosität, Dichte, Druck, Mehrphaseninformationen, Partikelkonzentration, Partikelgröße, Gasvolumenanteil, Durchfluss.

3. Verfahren (1) nach Anspruch 1 oder 2, **dadurch gekennzeichnet, dass** die Kalibrier-Betriebsbedingungen (x_cal) und/oder die angegebenen Betriebsbedingungen (x_new) Eigenschaften der Einbausituation in Strömungsrichtung vor dem einlaufseitigen Anschluss (6) und/oder hinter dem auslaufseitigen Anschluss (6) des Durchflussmessgeräts (2) sind, insbesondere Krümmungen, Abzweigungen, Durchmesseränderungen, Ventile, Einbauten, wobei bevorzugt die einlaufseitige und/oder auslaufseitige Einbausituation durch entsprechende Erweiterung des numerischen strömungsmechanischen Modells (10) berücksichtigt wird.

4. Verfahren (1) nach einem der Ansprüche 1 bis 3, **dadurch gekennzeichnet, dass** das numerische strömungsmechanische Modell (10) des Durchflussmessgeräts (2) anhand von originären definierten Kalibrier-Betriebsbedingungen (x_cal,orig) überprüft wird, indem das numerische strömungsmechanische Modell (10) mit originären definierten Kalibrier-Betriebsbedingungen (x_cal,orig) parametriert wird und ein Kalibrierkurven-Unterschied (K_diff) ermittelt (13) wird zwischen einer bei originären Kalibrier-Betriebsbedingungen (x_cal,orig) messtechnisch erfassten Kalibrierkurve (K_cal,orig) und einer von dem mit den originären definierten Kalibrier-Betriebsbedingungen (x_cal,orig) parametrierten numerischen strömungstechnischen Modell (10) berechneten Kalibrierkurve (K_new), vorzugsweise wobei das numerische strömungstechnische Modell (10) und/oder die Simulationsrandbedingungen solange angepasst (14) und präzisiert werden, bis der Kalibrierkurven-Unterschied (K_diff) kleiner als eine vorgegebene Kalibrierkurven-Unterschiedsgrenze (K_diff,lim) ist.

5. Verfahren (1) nach einem der Ansprüche 1 bis 4, **dadurch gekennzeichnet, dass** der Kalibrierkurven-Schritt (9) auf einem von dem Durchflussmessgerät (2) verschiedenen Service-Rechner durchgeführt wird, und die auf dem Service-Rechner ermittelte angepasste Kalibrierkurve (K_new) auf das Durchflussmessgerät (2) übertragen wird, vorzugsweise über eine Datenverbindung zwischen dem Service-Rechner und dem Durchflussmessgerät (2) oder mittels eines Bediengeräts, das über eine Bediengerätschnittstelle mit dem Durchflussmessgerät (2) verbunden wird.

6. Verfahren (1) nach einem der Ansprüche 1 bis 5, **dadurch gekennzeichnet, dass** das Durchflussmessgerät (2) ein magnetisch-induktives Durchflussmessgerät ist mit wenigstens einer Magnetfelderzeugungseinrichtung (15) zum Erzeugen eines das Messrohr (4) in einem Messbereich senkrecht zur Strömungsrichtung des Mediums (3) durchsetzenden Magnetfeldes (B), mit wenigstens einem Messelektrodenpaar als Messaufnehmer (5) im Messbereich des Messrohrs (4) zum Abgreifen einer in dem Medium (3) im Messrohr (4) induzierten elektrischen Spannung U als Aufnehmermessgröße m, wobei die Steuer- und Auswerteeinheit (7) mittels der Kalibrierkurve (K_cal) der induzierten elektrischen Spannung (U) einen Durchflussmesswert (Vp) zuordnet und so den Volumendurchfluss des Mediums (3) durch das Messrohr (4) ermittelt.

7. Verfahren nach Anspruch 6, **dadurch gekennzeichnet, dass** das von der Magnetfelderzeugungseinrichtung (15) erzeugte Magnetfeld (B) ortsaufgelöst ermittelt wird, dass für die angegebenen Betriebsbedingungen (x_new) mit dem numerischen strömungsmechanischen Modell (10) das Strömungsprofil (11) des Mediums (3) durch den Messbereich des Messrohrs (4) berechnet wird und dass mit einem mathematischen elektrodynamischen Modell (16) aus dem Strömungsprofil (11) des Mediums (3) im Messbereich des Messrohrs (4) und aus dem ermittelten Magnetfeld (B) im Messbereich des Messrohrs (4) sowie mit den Eigenschaften des Mediums (3) im Messrohr (4) unter den angegebenen Betriebsbedingungen (x_new) die induzierte elektrische Spannung (U) zwischen den Messelektroden des Messelektrodenpaares ermittelt wird und so die angepasste Kalibrierkurve (K_new) für die angegebenen Betriebsbedingungen (x_new) ermittelt wird, die einen Zusammenhang herstellt zwischen der in dem Medium (3) induzierten elektrischen Spannung (U) zwischen den Messelektroden des Messelektrodenpaars als Aufnehmermessgröße (m) und dem Durchfluss (Vp) des Mediums (3) durch das Messrohr (4) für die angegebenen Betriebsbedingungen (x_new).

8. Verfahren (1) nach Anspruch 7, **dadurch gekennzeichnet, dass** das von der Magnetfelderzeugungsvorrichtung (15) erzeugte Magnetfeld (B) im Messbereich des Messrohrs (4) anhand eines numerischen elektrodynamischen Modells (16) ortsaufgelöst berechnet wird und/oder durch Messung einer Mehrzahl von Magnetfeldstärken im Messbereich des Messrohrs (4) ortsaufgelöst messtechnisch bestimmt wird, insbesondere wobei die mit dem numerischen elektrodynamischen Modell (16) berechnete Magnetfeldverteilung mit der durch Messung bestimmten Magnetfeldverteilung verglichen wird und das numerische elektrodynamische Modell (16) so angepasst und präzisiert wird, bis ein Magnetfeldverteilungs-Unterschied kleiner als eine vorgegeben Magnetfeld-Unterschiedsgrenze ist.
